# EUROPÄISCHE PATENTSCHRIFT

(11) **EP 2 095 193 B1**
(45) Veröffentlichungstag und Bekanntmachung des Hinweises auf die Patenterteilung: **07.09.2011**
(21) Anmeldenummer: 07871779.0
(22) Anmeldetag: 06.12.2007
(51) Int. Cl.: G05B 19/042

(54) **VERFAHREN ZUM BETREIBEN EINES NACH DEM BLOCKMODELL ARBEITENDEN FELDGERÄTES FÜR EIN VERTEILTES AUTOMATISIERUNGSSYSTEM**
METHOD FOR OPERATING A BLOCK MODEL-BASED FIELD DEVICE FOR A DISTRIBUTED AUTOMATION SYSTEM
PROCÉDÉ D'UTILISATION D'UN APPAREIL DE TERRAIN FONCTIONNANT SELON LE MODÈLE DE BLOC POUR UN SYSTÈME D'AUTOMATISATION RÉPARTI

(30) Priorität: 28.12.2006 DE 102006062477
(43) Veröffentlichungstag der Anmeldung: 02.09.2009
(73) Patentinhaber: Endress + Hauser Process Solutions AG, 4153 Reinach (CH)
(72) Erfinder: DA SILVA NETO, Eugenio Ferreira, CH-4105 Biel-Benken (CH)
(74) Vertreter: Andres, Angelika Maria
(86) Internationale Anmeldenummer: PCT/EP2007/063468
(87) Internationale Veröffentlichungsnummer: WO 2008/080757

(56) Entgegenhaltungen:
- EP-A- 1 022 626
- DE-A1- 10 316 217
- DE-A1- 10 357 276
- US-A- 6 108 616
- US-A1- 2006 206 218

## Beschreibung

Die Erfindung betrifft ein Verfahren zum Betreiben eines nach dem Blockmodell arbeitenden Feldgerätes für ein verteiltes Automatisierungssystem gemäß dem Oberbegriff des Anspruchs 1.

In der Automatisierungstechnik (Fabrikautomatisierung bzw. Prozessautomatisierung) werden vielfach verteilte Automatisierungssysteme zur Anlagensteuerung eingesetzt. Zur Erfassung und/oder Beeinflussung der für die Steuerung relevanten Prozessvariablen dienen so genannten Feldgeräten. Beispiele hiefür sind Füllstandsmessgeräte, Massedurchflussmessgeräte, Druckschicht- und Temperaturmessgeräte etc, die als Sensoren die entsprechenden Prozessvariablen Füllstand, Durchfluss, Druck- bzw. Temperatur erfassen.

Zur Beeinflussung von Prozessvariablen dienen Aktoren, z.B. Ventile oder Pumpen, über die der Durchfluss einer Flüssigkeit in einem Rohrleitungsabschnitt bzw. der Füllstand in einem Behälter verändert werden kann.

Eine Vielzahl solcher Feldgeräte wird von der Firmengruppe Endress+Hauser hergestellt und vertrieben.

Zum Datenaustausch zwischen den Feldgeräten und den übergeordneten Einheiten (z.B. Leitsysteme, Steuereinheiten etc.) werden Feldbussysteme eingesetzt. Die übergeordneten Einheiten dienen zur Prozesssteuerung, Prozessvisualisierung, Prozessüberwachung und Anlageüberwachung sowie zur Inbetriebnahme und zur Bedienung der Feldgeräte.

Als Feldgeräte werden allgemein auch solche Einheiten bezeichnet, die direkt an einen Feldbus angeschlossen werden und zur Kommunikation mit übergeordneten Einheiten dienen (z.B. I/Os, Gateways, Linking Devices, Controller). Häufig sind Feldbusse auch in Unternehmensnetzwerke, die auf Ethernet-Basis arbeiten, integriert. Damit kann aus unterschiedlichen Bereichen eines Unternehmens auf Prozess- bzw. Feldgeräte- Informationen zugegriffen werden.

Zur globalen Kommunikation können Firmennetzwerke mit öffentlichen Netzwerken (z. B. Internet) verbunden sein.

Zum Bedienen und zur Inbetriebnahme der Feldgeräte sind entsprechende Bedienprogramme notwendig (z.B. Fieldcare, Endress+Hauser; Pactware; AMS, Emerson; Simatic PDM, Siemens).

Zur Anlagensteuerung von größeren Anlagen dienen Leitsystemanwendungen (z.B. Simatic PCS7, Siemens; Freelance, ABB; Delta V, Emerson).

Ein wesentlicher Aspekt bei den offenen Feldbusssystemen (Profibus, Foundation Fieldbus) ist die interoberabilität und die Austauschbarkeit von Geräten unterschiedlicher Hersteller. In einer Anlage können Geräte (Sensoren, Aktoren, etc.) unterschiedlicher Hersteller zusammen eingesetzt werden. Bei Ausfall eines Sensors eines bestimmten Herstellers ist es möglich, diesen durch einen ähnlichen Sensor eines anderen Herstellers zu ersetzen.

Diese Anforderungen erfordern eine klare Strukturierung von Daten und Funktionen in den einzelnen Feldgeräten, um einen einheitlichen Zugriff zu ermöglichen. Erreicht wird dies durch ein standardisiertes Blockmodell, das sowohl den Feldbussystemen Profibus wie auch Foundation Fieldbus zugrunde liegt.

Daten und Funktionen eines Feldgerätes werden dabei in unterschiedlichen Blöcken gekapselt, die nach außen als Kommunikationsobjekt in Erscheinung treten. Jedes Feldgerät, das nach dem Block-Modell arbeitet, weist zumindest einen Geräteblock (Resource bloc) auf, der alle Daten, die ein Gerät identifizieren z.B. Geräte-Herstellername, Seriennummer, Hardware- und Firmenversionen beinhaltet. Neben dem Geräteblock ist ein Übertragungsblock (Transducer bloc) vorgesehen, der zur Aufbereitung von Signalen dient. In der Regel handelt es sich bei diesen Signalen um Rohsignale (Eingangssignale), die von einem Messaufnehmer stammen und aufbereitet werden müssen, bevor diese weiteren Funktionsblöcken zugeführt werden können. Im Übertragungsblock erfolgt eine Kalibrierung und eine Linearisierung des Rohsignals, so dass als Ausgangssignale des Übertragungsblocks der eigentliche Messwert zur Verfügung steht. Es werden eine Vielzahl vordefinierter Basisfunktionsblöcke zur Verfügung gestellt. Typische Funktionsblöcke sind: Analog Input, Analog Output, Digital Input, Digital Output, PID- Regler etc.. Diese Funktionsblöcke werden in den Feldgeräten mit Hilfe eines entsprechenden Bedienwerkzeugs z.B. ControlCare Fa. Endress+Hauser zu einer Kontrollstrategie schaltet. Die so erstellte Kontrollstrategie dient ausschließlich der Prozesssteuerung.

Zur Anlagenüberwachung (Asset - Management) dienen in der Regel entsprechende Anwendungsprogramme, die ebenfalls auf den übergeordneten Einheiten ablaufen.

Prozesssteuerung und Anlagenüberwachung sind meist zwei völlig getrennte Systeme. Ein Datenaustausch zwischen diesen Systemen ist nur mit einem erheblichen Aufwand zu realisieren.

Eine solche Vorgehensweise gemäß dem Stand der Technik wird im Dokument EP-A-1 022626 beschrieben.

Aufgabe der Erfindung ist es deshalb ein Verfahren zum Betreiben eines nach dem Blockmodell arbeitenden Feldgerätes der Automatisierungstechnik anzugeben, dass ein einfacher Datenaustausch zwischen einem Prozesssteuerungssytem und einem Anlagenüberwachungssystemen ermöglicht.

Gelöst wird diese Aufgabe durch die im Anspruch 1 angegebene Merkmale.

Vorteilhafte Weiterentwicklung der Erfindung sind in den Unteransprüchen angegeben.

Die wesentliche Idee der Erfindung besteht darin, zwei virtuelle Feldgeräte-Objekte in einem Feldgerät vorzusehen, wobei das eine virtuelle Feldgerät-Objekt mit einer der Prozesssteuerung dienenden Funktionsblock-Anwendung verbunden ist und das andere virtuelle Feldgeräte-Objekt mit einer zweiten zur Anlagenüberwachung dienenden Funktionsblock-Anwendung verbunden ist. Beide Funktionsblock-Anwendungen werden nach verschiedenen Zeitplänen abgearbeitet. Dadurch dass auch zur Anlagenüberwachung Funktionsblock-Anwendungen mit entsprechenden Funktionsblöcken verwendet werden, ist ein einfacher Datenaustausch zwischen Prozesssteuerungssystemen und Anlageüberwachungssystemen möglich.

Nachfolgend ist die Erfindung anhand eines in der Zeichnung dargestellten Ausführungsbeispiels näher erläutert. Es zeigen:

Fig. 1: Verteiltes Automatisierungssystem in schematischer Darstellung

Fig. 2: Feldgerät eines verteilten Automatisierungssystems gemäß Fig. 1

Fig. 3: Funktionsblockanwendung in einem Feldgerät gemäß Fig. 2 in schematischer Darstellung.

Fig. 4: Funktionsblockanwendung gemäß Fig. 3 mit unterschiedlichen Schnittstellen.

Fig. 5: Blockschaltbild eines Feldgerätes gemäß Fig. 1

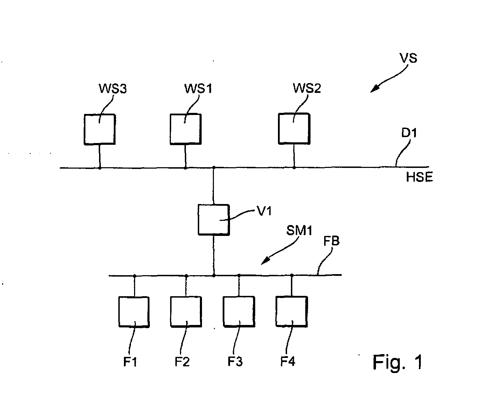

In Figur 1 ist ein verteiltes Automatisierungssystem VS näher dargestellt. An einen Datenbus D1 sind mehrere Rechnereinheiten (Arbeitsplatzrechner, Workstations) WS1, WS2, WS3 angeschlossen. Diese Rechnereinheiten dienen als übergeordnete Einheiten unter anderem zur Prozessvisualisierung, Prozessüberwachung und zum Engineering sowie zum Bedienen und Überwachen von Feldgeräten. Der Datenbus D1 arbeitet zum Beispiel nach dem HSE (High Speed Ethernet) Standard der Foundation Fieldbus. Über eine Verbindungseinheit V1 ist der Datenbus D1 mit einem Feldbusssegment SM1 verbunden. Die Verbindungseinheit V1 kann zum Beispiel eine Steuereinheit (FieldController, Fa. Endress+Hauer) sein. Das Feldbus-Segment SM1 besteht aus mehreren Feldgeräten F1, F2, F3, F4, die über einen Feldbus FB miteinander verbunden sind. Bei den Feldgeräten F1, F2, F3, F4 kann es sich wohl um Sensoren wie auch um Aktoren handeln. Der Feldbus FB arbeitet zum Beispiel nach dem Feldbusstandard Foundation Fielbus.

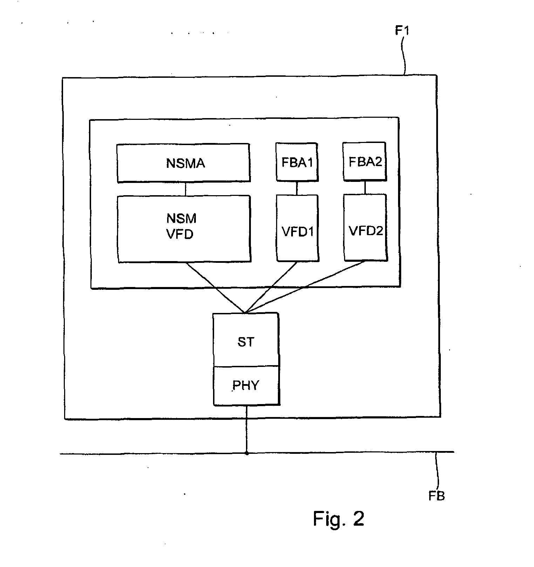

In Fig. 2 ist eines der Feldgeräte, zum Beispiel das Feldgerät F1, schematisch dargestellt. Die physikalische Verbindung des Feldgerätes F1 mit dem Feldbus erfolgt über eine Schnittstelle PHY, die als Feldbusschnittstelle ausgebildet ist. Diese Feldbusschnittstelle führt eine physikalische Signal-Anpassung auf den verwendeten Feldbusstandard durch. Die protokollspezifische Anpassung erfolgt in einem Kommunikationsstapel (Kommunikations-Stack) ST. Dieser Kommunikationsstapel ST ist mit mehreren virtuellen Feldgeräten-Objekten (Virtual Field Devices) verbunden. Diese virtuellen Feldgeräte-Objekte stellen alle über den Feldbus darstellbaren Kommunikationsobjekte und deren Objektbeschreibungen zur Verfügung. Ein virtuelles Feldgeräte-Objekt ist das Netzwerk- und Systemmanagementobjekt NSM-VFD, das mit einer Netzwerk- und Systemmanagamentanwendung NSMA verbunden ist. Ein weiteres virtuelles Feldgerät-Objekt ist das Objekt VFD1 das mit einer Funktionsblockanwendung FBA1 verbunden ist. Diese Objekte und Anwendungen sind bei herkömmlichen Feldgeräten bekannt.

Erfindungsgemäß ist im Feldgerät F1 ein weiteres virtuelles Feldgeräte-Objekt VFD2 vorgesehen, das mit einer Funktionsblockanwendung FBA2 verbunden ist.

Die Funktionsblockanwendung FBA1 dient zur Prozesssteuerung. Die Funktionsblockanwendung FBA2 zur Anlagenüberwachung.

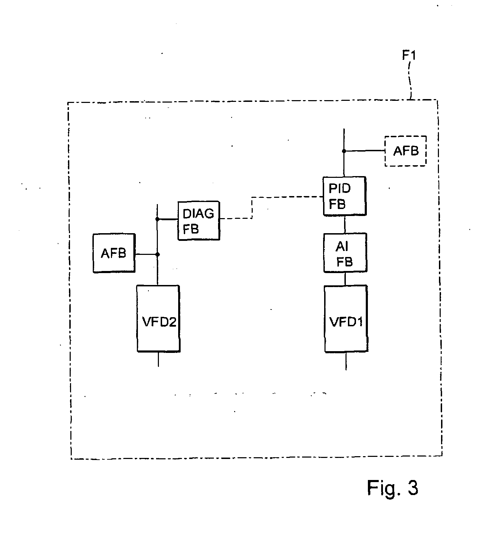

Diese beiden Funktionsblockanwendungen sind in Fig. 3 näher dargestellt. Das virtuelle Feldgeräte-Objekt VFD2 ist mit einem Anlagen-Überwachungssfunktionsblock AFB und einem Diagnosefunktionsblock DIAG-FB verbunden. Mit Hilfe des Diagnosefunktionsblocks DIAG-FB werden gerätespezifische Diagnoseinformationen abgefragt bzw. ermittelt. Der Anlagen-Überwachungsfunktionsblock AFB verarbeitet Anlagenüberwachungs-relevante Informationen. Bei diesen beiden Funktionsblöcken handelt es sich um so genannte flexible Funktionsblöcke (flexibel function blocks), für die die Foundation Fieldbus entsprechende aSpezifikationen erstellt hat.

Das virtuelle Geräteobjekt VFD1 ist mit einer herkömmlichen standardisierten Al Funktionsblock AI-FB verbunden. Der Al Funktionsblock Al-FB ist mit einem PID-Regler Funktionsblock PID-FB verbunden. Außerdem ist bei der Ansicht der Funktionsblockanwendung FBA1 der Anlageüberwachungsfunktionsblock AFB zu sehen, deshalb ist dieser gestrichelt dargestellt. Der Datenaustausch zwischen dem Diagnosefunktionsblock DIAG-FB und dem Reglerfunktionsblock PID-FB ist gestrichelt dargestellt. Die Anlagenüberwachungsfunktionsblöcke AFB und DIAG-FB entsprechen der IEC61131-3 Programmierung und werden in der vom Feldgerät F1 zur Verfügung gestellten Funktionsblockumgebung ausgeführt. Hierdurch ist ein einfacher Austausch zwischen einem Prozessteuerungssystem und einem im Anlageüberwachungssystem möglich. Die Differenzierung von Anlagenüberwachung und Prozessdaten bereits auf der Feldgeräteebene macht einen einfachen Datenaustausch möglich. Handelt es sich bei dem Feldgerät F1 zum Beispiel um eine pH Elektrode und meldet der Diagnosefunktionsblock DIAG-FB, dass die pH-Elektrode verschmutzt ist, so wird diese Information an den PID Regler Funktionsblock weitergeleitet, der daraufhin den PID Reglerfunktionsblock PID -FB in einen Sicherheitsmodus (Safety-Mode) schaltet, da in diesem Fall der sichere Betrieb der Anlagen möglicherweise nicht mehr gewährleistet ist. Entsprechende Verknüpfungen zwischen den Funktionsblöcken können mit herkömmlichen Bedienwerkzeugen einfach durchgeführt werden.

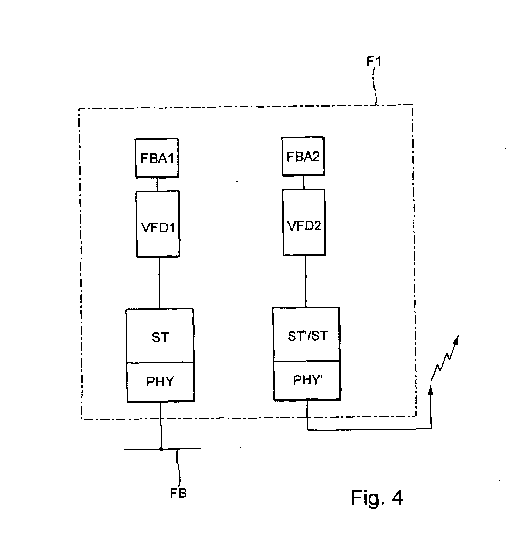

In Fig. 4 ist eine alternative Aufgestaltung der Erfindung dargestellt. Hierbei greifen die virtuellen Feldgeräte-Objekte VFD1 bzw. VFD2 auf unterschiedliche Kommunikations-Schnittstellen zu. Die Kommunikationsblöcke des herkömmlichen virtuellen Feldgerätes-Objekt VFD1 werden in gewohnter Weise über den Feldbus FB anderen Systemteilnehmern zur Verfügung gestellt. Das zweite virtuellen Feldgeräte-Objekte VFD2 ist mit einer Funkschnittstelle PHYI verbunden, die drahtlos Daten mit anderen Systemteilnehmern austauscht. Somit werden die anlageüberwachungsrelevanten Daten auf einem völlig anderen Kommunikationskanal übertragen. Dies entlastet die Datenübertragungsrate auf dem Feldbus FB.

Die Übertragung auf diesen Kommunikationskanal kann auch nach einem anderen Protokoll erfolgen. Dies ist durch den Kommunikationsstapel ST' angedeutet.

Je nach Verwendung der Funktionsblöcksätze (Prozesssteuerung, Anlagenüberwachung) können Speicherbereiche und logische Datenstrukturen dynamisch zugewiesen werden. Werden nur Anlagenüberwachungs-Funktionen benötigt, so kann der gesamte zur Verfügung stehende Speicherplatz diesen Funktionalitäten zugewiesen werden.

Unter Anlagenüberwachung soll auch Zustandsüberwachung im Sinne von Condition Monitoring verstanden werden.

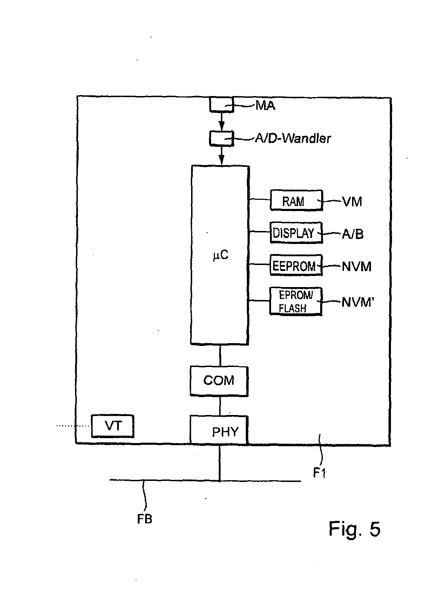

In Fig. 5 ist der Hardware mäßige Aufbau des Feldgerätes F1 näher dargestellt. Ein Mikrokontroller µC ist mit einem Messaufnehmer MA verbunden, der zur Auffassung einer Prozessvariablen z.B. eines PH-Wert dient. An den Mikrocontroller µC sind mehrere Speichereinheiten angeschlossen. Ein Speicher VM dient als temporärer flüchtiger Arbeitsspeicher. Als Programmspeicher für den Mirkocontroller µC dient EPROM-Speicher oder Flashspeicher. In einem nichtflüchtigen beschreibbaren Datenspeicher NVN z.B. einem EEPROM Speicher sind Parameterwerte abgespeichert. Zur Messwertanzeige und zur Bedienung ist eine Anzeige / Bedieneinheit AB vorgesehen, die ein Display und mehrere Drucktasten aufweist.

Zur Kommunikation mit dem Feldbus dient Kommunikationscontroller COM, dem eine Feldbusschnittstelle PHV nachgestaltet ist. Der Kommunikationsstapel bzw. die Kommunikationsstapel werden im Kommunikationscontroller COM abgearbeitet.

Zur Energieversorgung des Gerätes dient ein Versorgungsteil VT, das entweder mit einer externen Versorgungseinheit verbunden ist oder seine Energie vom Feldbus FB über die Feldbusschnittstelle PHY bezieht.

## Patentansprüche

1. Verfahren zum Betreiben eines nach dem Blockmodell arbeitenden Feldgeräts für ein verteiltes Automatisierungssystem mit mehreren Systemteilnehmem, das über einen Feldbus Daten austauscht,
wobei ein erstes virtuelles Feldgeräte-Objekt und ein zweites virtuelles Feldgeräte-Objekt jeweils mit einem Kommunikationsstapel einer Feldbusschnittstelle des Feldgerätes verbunden sind, und anderen Systemteilnehmern über den Feldbus Prozess-Daten und Anlagen-Überwachungs-Daten zur Verfügung stellen,
wobei eine erste in dem Feldgerät vorgesehene der Prozesssteuerung dienende Funktionsblock-Anwendung über das erste virtuelle Feldgeräte-Objekt Prozess-Daten anderen Systemteilnehmern zur Verfügung stellt,
wobei eine zweite Funktionsblock-Anwendung in dem Feldgerät vorgesehen ist, die zur Anlagen-Überwachung dient, und die über das zweite virtuelle Feldgeräte-Objekt Anlagen-Überwachungs-Daten anderen Systemteilnehmern zur Verfügung stellt,
wobei die erste und zweite Funktionsblock-Anwendung nach verschiedenen Zeitplänen abgearbeitet werden.

2. Verfahren nach Anspruch 1, **dadurch gekennzeichnet, dass** die zweite Funktionsblock-Anwendung einen Diagnose-Funktionsblock aufweist, der gerätespezifische Diagnoseinformation erfasst.

3. Verfahren nach einem der vorhergehenden Ansprüchen, **dadurch gekennzeichnet, dass** die zweite Funktionsblock-Anwendung einen Anlagen-Überwachungs-Funktionsblock aufweist, der Anlagen-Überwachungsinformationen bereitstellt.

4. Verfahren nach einem der vorhergehenden Ansprüche, **dadurch gekennzeichnet, dass** ein Funktionsblock der ersten Funktionsblock-Anwendung und ein Funktionsblock der zweiten Funktionsblock-Anwendung Daten austauschen.

5. Verfahren nach einem der vorhergehenden Ansprüche, **dadurch gekennzeichnet, dass** das erste und zweite virtuelle Feldgeräte-Objekt mit unterschiedlichen Schnittstellen und/oder Kommunikationsstapeln verbunden sind.

## Claims

1. Method for operating a block-model-based field device for a distributed automation system with several system users that exchanges data via a fieldbus,
where a first virtual field device object and a second virtual field device object are both connected to a communication stack of a fieldbus interface of the field device and make process data and system monitoring data available to other system users via the fieldbus,
where a first function block application, which is provided in the field device and is used for process control, makes process data available to other system users via the first virtual field device object,
where a second function block application is provided in the field device, which is used for system monitoring and which makes system monitoring data available to other system users via the second virtual field device object, where the first and second function block applications are run according to different schedules.

2. Method as per Claim 1, **characterized in that** the second function block application has a diagnostic function block which records device-specific diagnostic information.

3. Method as per one of the previous claims, **characterized in that** the second function block application has a system monitoring function block which makes system monitoring information available.

4. Method as per one of the previous claims, **characterized in that** a function block of the first function block application and a function block of the second function block application exchange data.

5. Method as per one of the previous claims, **characterized in that** the first and second virtual field device objects are connected to different interfaces and/or communications stacks.

## Revendications

1. Procédé destiné à l'exploitation d'un appareil de terrain fonctionnant d'après le modèle de bloc, destiné à un système d'automatisation réparti avec plusieurs utilisateurs système, lequel échange des données par le biais d'un bus de terrain, un premier objet virtuel d'appareil de terrain et un deuxième objet virtuel d'appareil de terrain étant reliés avec une pile de communication d'une interface de bus de terrain de l'appareil de terrain, et d'autres utilisateurs système mettant à disposition, par l'intermédiaire du bus de terrain, des données-process et des données de surveillance d'installation,
une première application de bloc fonctionnel, prévue dans l'appareil de terrain et servant à la commande du process, mettant à disposition aux autres utilisateurs système des données-process par l'intermédiaire du premier objet virtuel d'appareil de terrain,
une deuxième application de bloc fonctionnel étant prévue dans l'appareil de terrain, laquelle sert à la surveillance de l'installation, et qui met à disposition aux autres utilisateurs système des données de surveillance d'installation par l'intermédiaire du deuxième objet virtuel d'appareil de terrain,
une première et une deuxième application de bloc fonctionnel étant traitées d'après différents calendriers.

2. Procédé selon la revendication 1, **caractérisé en ce que** la deuxième application de bloc fonctionnel comporte un bloc fonctionnel de diagnostic, qui saisit des informations de diagnostic spécifiques aux appareils.

3. Procédé selon l'une des revendications précédentes, **caractérisé en ce que** la deuxième application de bloc fonctionnel comporte un bloc fonctionnel de surveillance d'installation, qui met à disposition des informations de surveillance d'installation.

4. Procédé selon l'une des revendications précédentes, **caractérisé en ce qu'**un bloc fonctionnel de la première application de bloc fonctionnel et un bloc fonctionnel de la deuxième application de bloc fonctionnel échangent des données.

5. Procédé selon l'une des revendications précédentes, **caractérisé en ce que** le premier et le deuxième objet virtuel d'appareil de terrain sont reliés avec différentes interfaces et/ou piles de communication.
